Europäisches Patentamt

European Patent Office

Office européen des brevets

(11) Numéro de publication: **0 358 552**
**A1**

## (12) DEMANDE DE BREVET EUROPEEN

(21) Numéro de dépôt: **89402392.8**

(22) Date de dépôt: **01.09.89**

(51) Int. Cl.5: **A 01 K 61/00**

(30) Priorité: **02.09.88 FR 8811524**
**12.12.88 FR 8816322**

(43) Date de publication de la demande:
**14.03.90 Bulletin 90/11**

(84) Etats contractants désignés:
**BE DE ES FR GB GR IT NL SE**

(71) Demandeur: **Gilbert, Jacques**
**127 C Boulevard Blanqui**
**F-75013 Paris (FR)**

(72) Inventeur: **Gilbert, Jacques**
**127 C Boulevard Blanqui**
**F-75013 Paris (FR)**

(74) Mandataire: **Nony, Michel et al**
**Cabinet NONY & CIE 29, rue Cambacérès**
**F-75008 Paris (FR)**

(54) **Dispositif destiné à conformer parallélépipédiquement une enceinte aquacole et organe de cloisonnement d'une enceinte.**

(57) L'invention est relative à un dispositif destiné à conformer parallélépipèdiquement une enceinte aquacole réalisée à partir d'un tube en matière relativement souple.

Il comprend une pièce d'angle (2) rigide formée de deux nappes (6b) superposées et solidarisées de manière à former entre elles une cavité présentant une ouverture (9) en forme de fente dont la longueur est sensiblement égale à une première dimension du parallélépipède que l'on souhaite obtenir.

EP 0 358 552 A1

## Description

## Dispositif destiné à conformer parallélépipédiquement une enceinte aquacole et organe de cloisonnement d'une enceinte.

La présente invention concerne un dispositif destiné à conformer parallélépipédiquement une enceinte aquacole, et plus particulièrement une telle enceinte réalisée à partir d'un tube en matière relativement souple.

Les huîtres, moules, palourdes et autres bivalves, ainsi que les poissons ou autres sujets d'aquaculture, sont élevés actuellement le plus souvent dans des enceintes grillagées et notamment dans des poches ostréicoles, qui sont généralement réalisées à partir de cylindres en matière plastique réticulée qui se trouvent plus ou moins aplaties dans les conditions habituelles d'utilisation.

Les poches de grillage de matière plastique sont produites industriellement sous forme d'un cylindre continu qui est ensuite découpé en éléments ayant généralement une longueur de l'ordre d'un mètre.

Pour enfermer les sujets d'élevage dans ces poches, les deux extrémités du cylindre sont fermées. L'une des extrémités peut être soudée d'une manière quelconque, et l'autre extrémité (ou les deux extrémités s'il n'y a pas de soudure), est fermée par un dispositif permettant de remplir la poche et de la vider de son contenu. Les fermetures actuellement utilisées sont constituées par exemple par un jonc passé dans les mailles de la poche, par des crochets de fil de fer, ou par une couture de ficelle. Les inconvénients de ces procédés de fermeture résident dans le fait qu'ils sont relativement longs à mettre en oeuvre, difficilement mécanisables et qu'en outre ils n'assurent pas toujours une fermeture efficace de la poche, notamment dans les angles. Ils provoquent enfin fréquemment un écrasement de l'extrémité ainsi fermée, réduisant le volume intérieur de la poche.

L'un des buts de l'invention est de fournir un dispositif permettant de provoquer un gonflement de l'enceinte en lui donnant une section proche d'un rectangle, c'est-à-dire en lui donnant une forme parallélépipédique et ainsi, à poids de grillage égal, de présenter un plus grand volume intérieur ainsi qu'un plus grand moment d'inertie assurant une meilleure rigidité longitudinale.

Un autre but de l'invention est d'assurer une fermeture parfaite de l'une ou des deux extrémités de l'enceinte.

Un autre but de l'invention est de permettre une manutention mécanisée en fournissant un dispositif qui prend largement appui sur la matière de l'enceinte et peut ainsi résister à des efforts de traction importants.

Un autre but de l'invention est de permettre éventuellement l'accrochage des enceintes entre elles ou sur des supports.

A cet effet, l'invention a tout d'abord pour objet un dispositif destiné à conformer parallélépipédiquement une enceinte aquacole réalisée à partir d'un tube en matière relativement souple, caractérisé par le fait qu'il comprend une pièce d'angle rigide formée de deux nappes superposées et solidarisées de manière à former entre elles une cavité présentant une ouverture en forme de fente dont la longueur est sensiblement égale à une première dimension du parallélépipède que l'on souhaite obtenir.

L'extrémité du tube étant aplatie et fermée d'une manière quelconque, on obtient ainsi deux coins qui peuvent être chacun introduit dans la cavité d'un dispositif selon l'invention. A la sortie de l'ouverture en forme de fente, il se produit naturellement deux plis qui donnent à la section de départ de l'enceinte une forme rectangulaire.

De préférence, l'une des deux nappes comporte une fente débouchant sensiblement perpendiculairement dans ladite ouverture.

En effet, les dispositifs de fermeture généralement utilisés aplatissent l'enceinte sur une certaine distance longitudinale, rendant ainsi difficile l'introduction des coins dans la cavité. La fente précitée permet ainsi le passage de l'extrémité aplatie de l'enceinte et du dispositif de fermeture.

Les deux nappes peuvent par exemple être sensiblement en forme de triangle isocèle, l'ouverture étant formée entre les bases desdits triangles.

Dans un autre mode de réalisation de l'invention, les deux nappes sont également en forme de triangles isocèles, mais l'ouverture est alors formée entre les côtés égaux de ces triangles.

Le dispositif peut ainsi être réalisé simplement par pliage d'une feuille rectangulaire dont la plus grande dimension correspond à la longueur de l'ouverture en forme de fente, et dont la plus petite dimension est sensiblement deux fois moindre. Il suffit alors pour obtenir la fente précitée de laisser un espace entre les deux petits côtés du rectangle qui, du fait du pliage, se retrouvent en vis-à-vis.

Dans un mode de réalisation préféré, le dispositif selon l'invention comprend en outre un profilé de fermeture ayant une longueur supérieure à une deuxième dimension du parallélépipède que l'on souhaite obtenir, ladite pièce d'angle comportant une partie tubulaire en saillie d'axe sensiblement parallèle à ladite fente, de section correspondant à la section extérieure dudit profilé, et débouchant dans ladite cavité par ladite fente.

Le profilé est utilisé pour fermer l'extrémité du tube, par exemple par pincement. Les extrémités du profilé sont alors engagées dans la partie tubulaire en saillie en même temps que les coins de l'enceinte sont introduits dans la cavité. Sous réserve d'utiliser un profilé suffisamment rigide, on obtient ainsi pour l'enceinte une section de départ quasiment rectangulaire.

Des moyens de blocage tels que des crans formés, soit sur le profilé, soit sur la pièce d'angle précitée, soit sur les deux, peuvent être prévus pour éviter un glissement de la pièce d'angle sur le profilé qui provoquerait un désassemblage de l'ensemble.

Ces moyens de blocage peuvent également comprendre un organe de blocage supplémentaire comportant au moins un trou de forme correspondant à la section extérieure du profilé et destiné à être engagé sur celui-ci après la pièce d'angle.

Dans ce cas, cet organe de blocage comporte avantageusement deux trous de forme correspondant à cette section extérieure du profilé, opposés dos-à-dos.

Cet agencement permet de solidariser entre elles, deux ou plusieurs enceintes par l'intermédiaire de cet organe de blocage.

L'organe de blocage peut comporter en outre au moins un troisième trou pour le passage d'une tige de liaison avec un deuxième organe de blocage.

Ainsi, la tige de liaison, par exemple une tige filetée, permet d'éviter l'écartement des deux organes de blocage et ainsi le glissement des pièces d'angle.

Il a déjà été fait remarquer que le dispositif selon l'invention donnait une beaucoup plus grande rigidité à l'enceinte que les dispositifs traditionnels. Il est donc possible de donner à ces enceintes une longueur nettement supérieure à celle des enceintes actuellement utilisées. Par ailleurs, on a également noté que le dispositif selon l'invention pouvait permettre l'accrochage d'une enceinte, soit à support fixe, soit à une autre enceinte, auquel cas elle peut se trouver disposée verticalement.

Dans l'un et l'autre cas, il est souhaitable d'éviter que les animaux contenus dans l'enceinte ne se rassemblent en un même point.

A cet effet, l'invention a également pour objet un organe de cloisonnement d'une enceinte aquacole conformé parallélépipédiquement à l'aide d'au moins un dispositif tel que décrit ci-dessus, caractérisé par le fait qu'il comprend un cadre rectangulaire dont les dimensions intérieures correspondent sensiblement à une section de l'enceinte, ce cadre étant réalisé en deux parties dont l'une au moins porte des tiges d'espacement prédéterminé, aptes à pénétrer à l'intérieur de l'enceinte lorsque le cadre est disposé autour de cette dernière.

L'espacement des tiges est bien entendu fonction de la taille des sujets d'élevage à moins que ces tiges ne soient utilisées comme support à une cloison mobile. Le cadre peut être disposé à n'importe quel niveau de l'enceinte à partir de son extérieur en introduisant les tiges à travers les mailles de l'enceinte. La deuxième partie du cadre est alors assujettie à la première partie.

Ces cadres présentent en outre l'avantage supplémentaire de redonner de place en place une section rectangulaire à des enceintes de très grande longueur.

Le mode de réalisation décrit ci-dessus vise plus particulièrement le cas où l'on souhaite suspendre ces enceintes verticalement, et notamment les suspendre les unes aux autres.

Il arrive toutefois dans certains cas que l'on préfère poser les enceintes horizontalement, éventuellement en en solidarisant plusieurs entre elles de manière à faciliter la manutention.

A cet effet, on prévoit, dans un mode de réalisation particulier de l'invention, deux flasques latéraux formés aux extrémités de l'ouverture en forme de fente, sensiblement perpendiculairement aux nappes superposées.

Ces flasques peuvent servir d'appuis horizontaux pour les coins des enceintes qui peuvent comporter en outre, dans un mode de réalisation particulier, une oreille de fixation dans laquelle est formée un orifice de fixation pour le passage d'une tige de liaison.

Il est ainsi possible en superposant les oreilles de fixation de deux dispositifs ainsi réalisés et en faisant traverser les orifices correspondants par une même tige de liaison, d'assembler les coins de deux enceintes. Des ensembles de plus grande dimension peuvent être obtenus en superposant les orifices de fixation de quatre dispositifs pour assembler entre eux les coins de quatre enceintes.

Les flasques peuvent par exemple être réalisés sensiblement rectangulairement, l'un de leurs coins étant situé au niveau de ladite fente, auquel cas lesdites oreilles sont réalisées de préférence en saillie au coin opposé de manière à assurer une superposition facile.

Dans le cas où les dispositifs comportent une partie tubulaire en saillie, l'invention comprend avantageusement au moins une entretoise reliant chacun des flasques latéraux à cette partie tubulaire de manière à rigidifier ces flasques.

On décrira maintenant à titre d'exemple non limitatif des modes de réalisation particuliers de l'invention en référence aux dessins annexés dans lesquels :

- la figure 1 est une vue en perspective d'un dispositif selon l'invention,
- la figure 2 en est une vue de face,
- la figure 3 en est une vue de côté,
- la figure 4 est une représentation schématique d'une enceinte obtenue à l'aide de ce dispositif,
- la figure 5 est une vue en perspective d'un organe de blocage,
- la figure 6 est une vue partiellement en coupe de deux enceintes solidarisées à l'aide de ce dispositif de blocage,
- la figure 7 est une vue en perspective d'un organe de cloisonnement selon l'invention,
- la figure 8 est une vue de face d'un dispositif selon un autre mode de réalisation de l'invention,
- la figure 9 en est une vue de dessous,
- la figure 10 en est une vue de côté,
- la figure 11 en est une vue en perspective,
- la figure 12 est une vue en perspective d'un autre dispositif selon l'invention,
- la figure 13 en est une vue de dessous, et
- la figure 14 est une vue en coupe selon la ligne XIV-XIV de la figure 13.

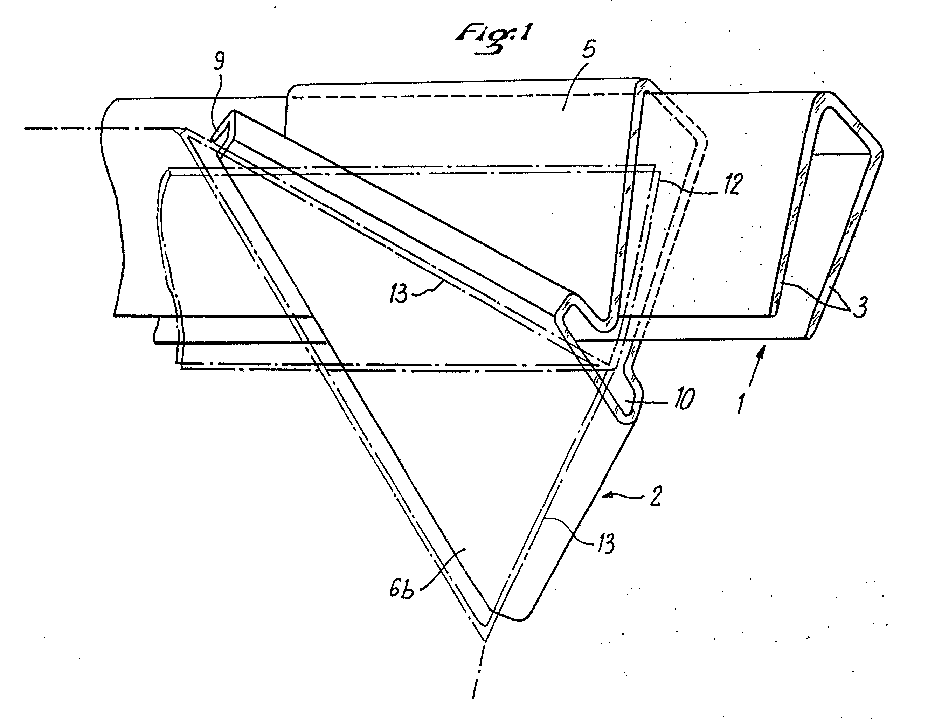

Dans la figure 1, le dispositif selon l'invention a été représenté en traits pleins, alors que l'enceinte a été schématisée en traits mixtes.

Ce dispositif comprend pour l'essentiel un profilé 1 et une pièce d'angle 2 réalisés en matière plastique rigide.

Le profilé 1 est un profilé en U dont les deux ailes 3 ont tendance à s'appliquer l'une contre l'autre par effet d'élasticité, ce qui assure la fermeture de l'enceinte.

La pièce d'angle 2 comporte, d'une part une partie d'aplatissement 4 et d'autre part, une partie de fixation 5.

La partie 4 est constituée de deux plaques 6 pratiquement triangulaires isocèles, ou en fait, dans le cas présent, légèrement trapézoïdales, réunies par leurs côtés en 7 de manière à laisser entre elles une cavité 8. Par contre, la base des triangles (ainsi éventuellement que la petite base 10 dans le cas d'un trapèze) ne sont pas reliées de manière à former une ouverture 9 en forme de fente.

La partie 5 qui, dans le cas présent, a la même dimension axiale que la partie 4, bien que ceci ne soit pas indispensable, est tubulaire et sa section intérieure correspond sensiblement à la section extérieure du profilé 1.

La partie inférieure de la partie 5 est ouverte et reliée aux bords d'une fente 11 formée dans la plaque 6a, faisant ainsi communiquer la cavité 8 avec l'intérieur de la partie 5.

La fente 11 est perpendiculaire aux bases des plaques 6a et 6b et débouche dans l'ouverture 9 de sorte que l'axe de la partie 5 est également sensiblement perpendiculaire à l'ouverture 9.

Pour conformer en forme de parallélépipède une enceinte réalisée à partir d'un tube en matière souple, on commence par aplatir l'extrémité de ce tube et à introduire entre les ailes 3 du profilé 1 les deux nappes 12 ainsi obtenues. L'extrémité de l'enceinte est ainsi fermée.

On engage alors la partie tubulaire 5 de la pièce d'angle 2 sur le profilé 1, en faisant former deux plis 13 à la partie du tube qui dépasse du profilé 1, de manière à former un triangle 14 qui s'engage dans la cavité 8.

Une autre pièce d'angle 2 est disposée à l'autre extrémité du profilé 1, de sorte que l'extrémité de l'enceinte ainsi formée prend une forme rectangulaire dont les petits côtés 15 ont une longueur égale à la longueur de l'ouverture 9, c'est-à-dire à la base des plaques 6a et 6b, et dont les grands côtés 16 sont fonction du diamètre du tube utilisé à l'origine.

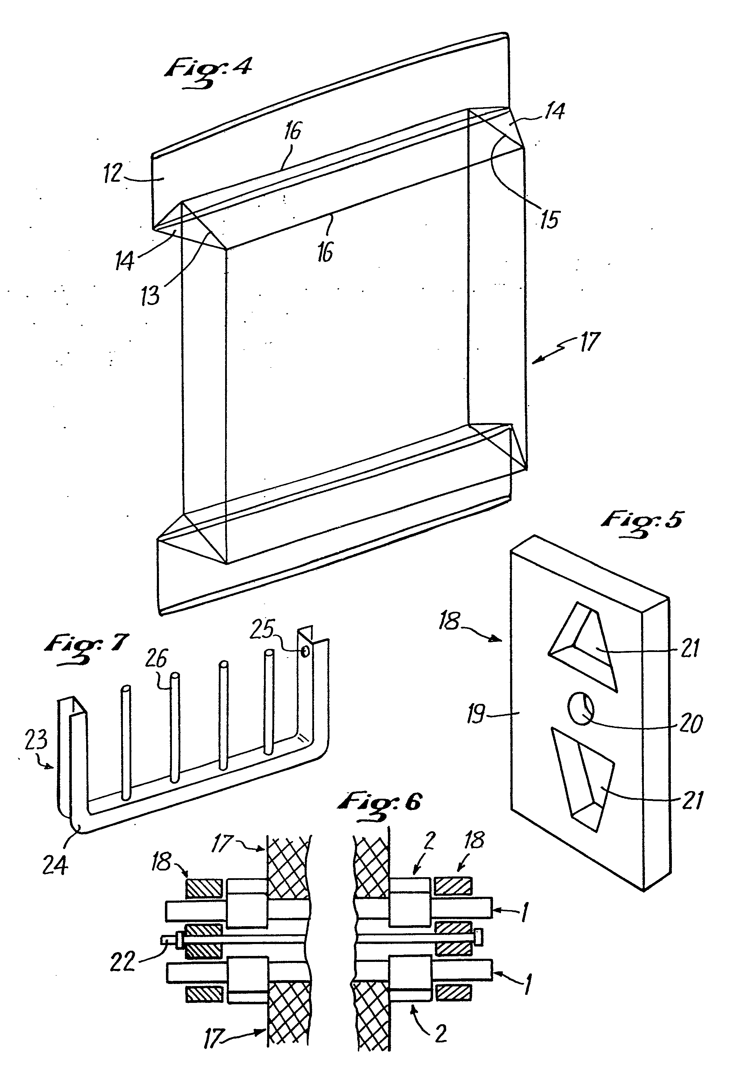

L'ensemble de ces opérations est répété à l'autre extrémité du tube, de sorte que l'on obtient alors une enceinte parallélépipédique 17 telle que représentée à la figure 4.

Le blocage des pièces de coin 2 sur les profilés 1 peut être réalisé à l'aide d'organes 18 se présentant, comme représenté à la figure 5, sous la forme d'une plaque 19 munie d'un trou central 20 et de deux ouvertures 21 ayant la même forme que la section extérieure du profilé 1. Ces deux ouvertures sont disposées symétriquement et opposées dos-à-dos de manière à pouvoir recevoir chacune l'extrémité d'un des profilés 1 d'une enceinte 17.

Deux organes 18 sont ainsi montés de part et d'autre des extrémités de deux enceintes 17 jusqu'à venir en contact avec les pièces d'angle respectives 2, puis une tige de liaison 22 est engagée dans les trous 20 des deux organes 18 pour les empêcher de s'écarter. Tout moyen peut être prévu à cet effet tel que des écrous si la tige 22 est filetée.

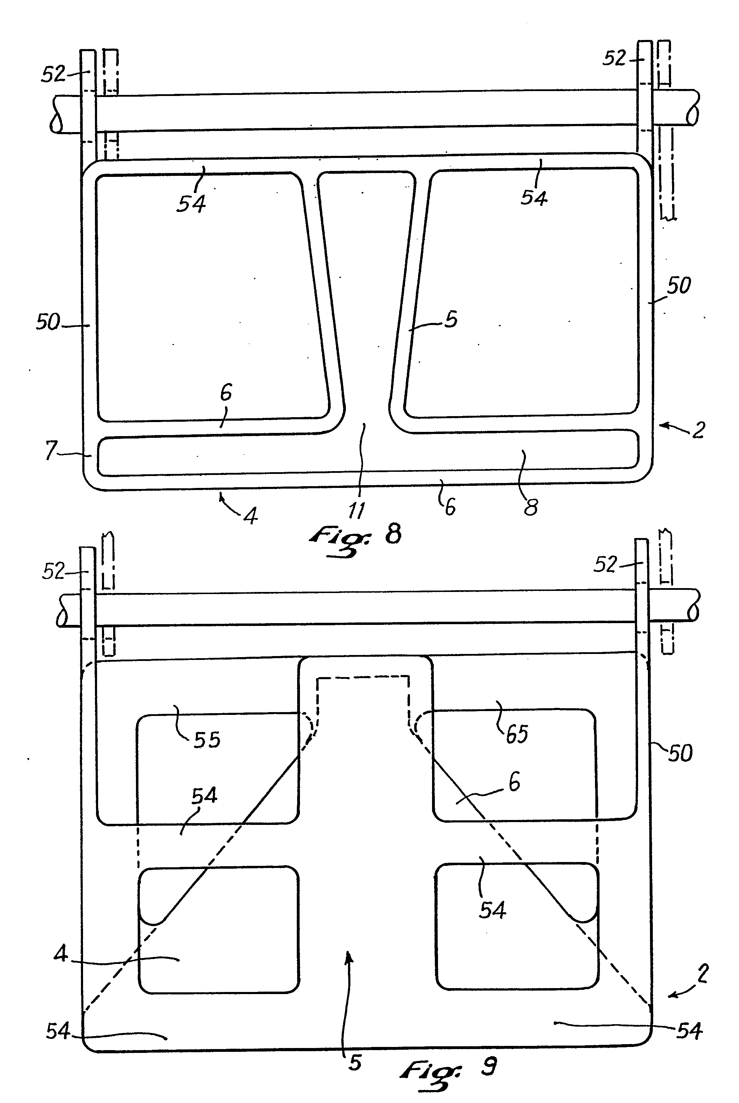

Les enceintes 17 obtenues conformément à l'invention peuvent être notamment disposées verticalement, auquel cas, on peut prévoir des cloisonnements internes réalisés à l'aide de l'organe de la figure 7.

Cet organe 23 est composé d'un cadre en deux parties dont une partie 24 a une forme en U dont la section intérieure correspond sensiblement à la section transversale de l'enceinte 17.

L'autre partie du cadre 23 (non représentée) peut être constituée par une simple tige passant dans des orifices 25 de la partie 24 et bloquée par tout moyen convenable.

Des tiges 26 sont par ailleurs montées sur la partie 24 du cadre 23 perpendiculairement à son ouverture.

Ces organes de cloisonnement sont installés sur l'enceinte 17 en engageant cette enceinte à l'intérieur de la partie 24 du cadre, tout en faisant pénétrer les tiges 26 à l'intérieur de l'enceinte en leur faisant traverser les mailles de l'enceinte. Le cadre est alors refermé et l'organe de cloisonnement 23 se trouve ainsi maintenu en position par rapport à l'enceinte 17 par les tiges 26.

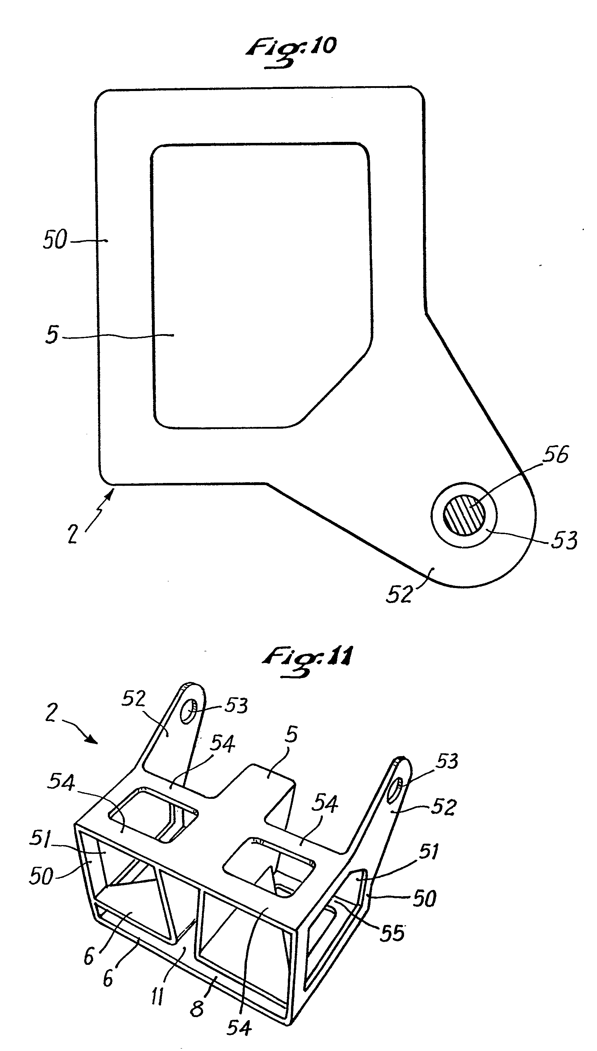

On se référera maintenant au mode de réalisation des figures 8 à 11, dans lesquelles les références des figures précédentes ont été conservées pour les éléments communs.

Dans ce cas, deux flasques latéraux 50 sont formés aux extrémités de la fente d'ouverture de la cavité 8 perpendiculairement aux plaques 6. Dans le cas présent, des ouvertures 51 sont découpées dans les flasques 50.

Ces flasques sont sensiblement rectangulaires et comportent en outre, dans le prolongement de leurs coins opposés aux extrémités de la fente, des oreilles en saillie 52 munies de trous 53.

La hauteur des flasques 50 est sensiblement la même que cette de la partie 5 et les bords supérieurs de ces flasques sont réunis à la surface supérieure de cette partie par des entretoises 54.

D'autres entretoises 55 réunissent le bord inférieur des flasques 50 à la partie inférieure de la partie 5.

Ces pièces d'angle fonctionnent comme celles du brevet principal.

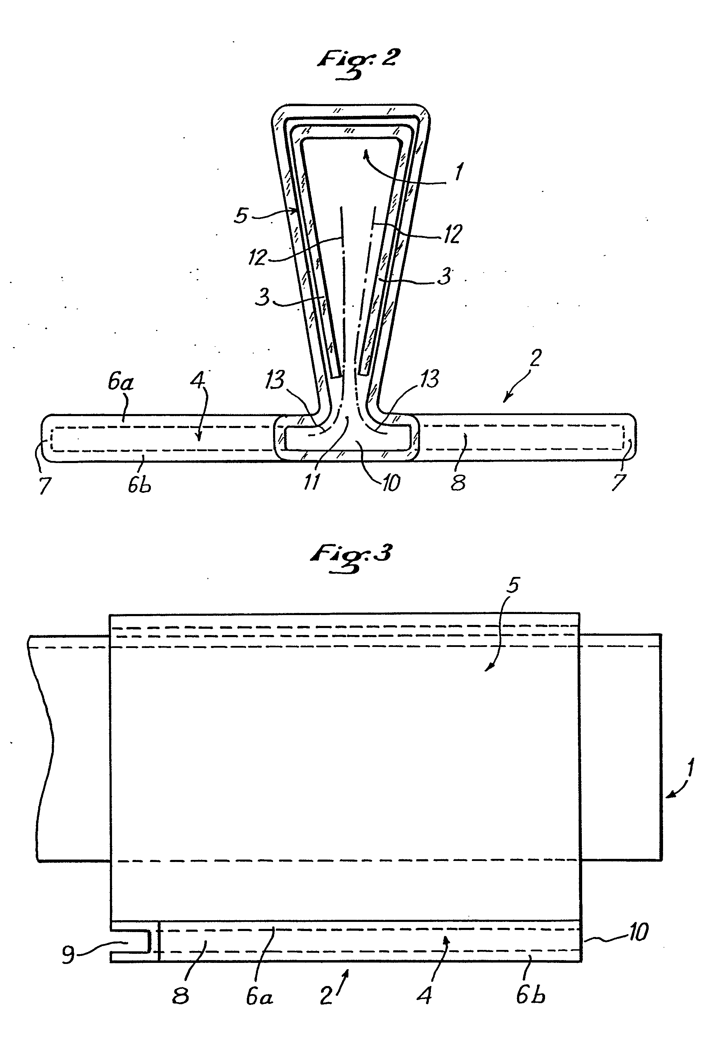

Toutefois, si l'on souhaite disposer horizontalement les enceintes formées à l'aide de ces pièces, les flasques 50 servent d'appuis horizontaux. De plus, il est possible de mettre deux pièces d'angle telles qu'elles viennent d'être décrites dos à dos en les décalant légèrement latéralement de manière que les orifices 53 de leurs oreilles de fixation 52 se trouvent en vis-à-vis, et de les solidariser à l'aide d'une tige 56 traversant ces orifices tel que cela est représenté schématiquement en traits mixtes aux figures 1 et 2.

Deux autres dispositifs peuvent également être engagés sur la même tige avec leurs flasques 50 adjacents aux flasques des deux premiers dispositifs, ce qui permet ainsi de réunir quatre coins de quatre enceintes.

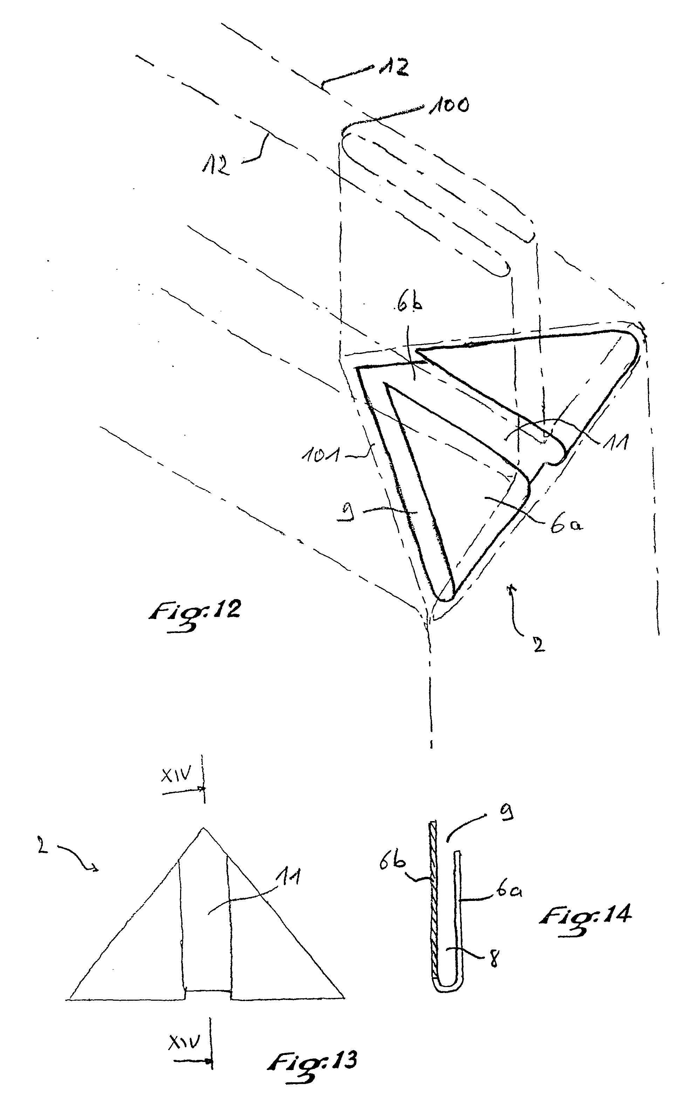

On se référera maintenant aux figures 12 à 14 représentant un autre mode de réalisation de l'invention.

Comme dans la figure 1, le dispositif a été représenté à la figure 12 en traits pleins alors que l'enceinte est schématisée en traits mixtes.

La pièce d'angle 2 est toujours formée de deux nappes 6a et 6b superposées et en forme de triangles isocèles, la nappe 6a comportant une fente 11 le long de sa hauteur perpendiculaire à sa base.

Par contre, l'ouverture 9 en forme de fente est maintenant réalisée le long des deux côtés égaux des triangles isocèles, les nappes 6a et 6b étant reliées le long de leurs bases respectives.

Dans le cas présent, les deux nappes 12 du tube destiné à former l'enceinte sont repliées vers l'intérieur à leurs extrémités, pour former un pli 100 ce qui a pour effet de réaliser un triangle de matière 101.

Le dispositif 2 est engagé sur ce triangle avec sa nappe 6b en-dessous du triangle et ses deux demi-nappes 6a en-dessus du triangle, le pli 100 s'engageant dans la fente 11.

Le dispositif 2 est réalisé dans une matière suffisamment élastique de manière à pincer le triangle 101 et à être ainsi maintenu sur l'enceinte.

La longueur de la base des deux nappes est sensiblement égale à l'épaisseur que l'on souhaite obtenir pour l'enceinte.

Diverses variantes et modifications peuvent bien entendu être apportées à la description qui précède, sans sortir pour autant du cadre ni de l'esprit de l'invention.

**Revendications**

1. Dispositif destiné à conformer parallélépipédiquement une enceinte aquacole réalisée à partir d'un tube en matière relativement souple, caractérisé par le fait qu'il comprend une pièce d'angle (2) rigide formée de deux nappes (6a,6b) superposées et solidarisées de manière à former entre elles une cavité (8) présentant une ouverture (9) en forme de fente dont la longueur est sensiblement égale à une première dimension du parallélépipède que l'on souhaite obtenir.

2. Dispositif selon la revendication 1, caractérisé par le fait que l'une des deux nappes comporte une fente (11) débouchant sensiblement perpendiculairement dans ladite ouverture.

3. Dispositif selon la revendication 2, caractérisé par le fait qu'il comprend un profilé de fermeture (1) ayant une longueur supérieure à une deuxième dimension du parallélépipède que l'on souhaite obtenir, ladite pièce d'angle comportant une partie tubulaire (5) en saillie, d'axe sensiblement parallèle à ladite fente (11), de section correspondant à la section extérieure dudit profilé, et débouchant dans ladite cavité par ladite fente.

4. Dispositif selon la revendication 3, caractérisé par le fait qu'il comprend des moyens de blocage (18) de ladite pièce d'angle sur ledit profilé.

5. Dispositif selon la revendication 4, caractérisé par le fait que lesdits moyens de blocage comprennent un organe de blocage comportant au moint un trou (21) de forme correspondante à la section extérieure dudit profilé.

6. Dispositif selon la revendication 5, caractérisé par le fait que ledit organe de blocage comporte deux trous de forme correspondante à ladite section, opposés dos-à-dos.

7. Dispositif selon la revendication 6, caractérisé par le fait que ledit organe de blocage comporte au moins un troisième trou (20) pour le passage d'une tige de liaison (22) avec un deuxième organe de blocage.

8. Dispositif selon l'une quelconque des revendications 1 à 7, caractérisé par le fait que les deux nappes sont sensiblement en forme de triangle isocèle, ladite ouverture étant formée entre les bases desdits triangles.

9. Dispositif selon l'une quelconque des revendications 1 à 7, caractérisé par le fait que les deux nappes sont sensiblement en forme de triangles isocèles, ladite ouverture étant formée entre les côtés égaux desdits triangles.

10. Dispositif, selon l'une quelconque des revendications 1 à 4, caractérisé par le fait qu'il comprend deux flasques latéraux (50) formés aux extrémités de l'ouverture en forme de fente, sensiblement perpendiculairement aux nappes superposées (6).

11 . Dispositif selon la revendication 10, caractérisé par le fait que chaque flasque comporte une oreille de fixation (52) dans laquelle est formé un orifice de fixation pour le passage d'une tige de liaison.

12. Dispositif selon l'une quelconque des revendications et 11, caractérisé par le fait que lesdits flasques sont sensiblement rectangulaires, l'un de leurs coins étant situé au niveau de l'extrémité de ladite fente.

13. Dispositif selon l'une quelconque des revendications 10 à 12, rattachée à l'une quelconque des revendications 3 et 4, caractérisé par le fait qu'il comprend au moins une entretoise reliant chacun des flasques latéraux à la partie tubulaire en saillie.

14. Organe de cloisonnement d'une enceinte aquacole conformée parallélépipédiquement à l'aide d'au moins un dispositif selon l'une quelconque des revendications 1 à 13, caractérisé par le fait qu'il comprend un cadre rectangulaire (23) dont les dimensions intérieures correspondent sensiblement à une section de ladite enceinte, ledit cadre étant réalisé en deux parties dont l'un au moins (24) porte des tiges (26) d'espacement prédéterminé aptes à pénétrer à l'intérieur de l'enceinte lorsque le cadre est disposé autour de cette dernière.

*Fig.1*

9  5  12  3  13  1  10  2  6b  13

EP 0 358 552 A1

## Fig. 2

## Fig. 3

*Fig. 4*

*Fig. 5*

*Fig. 7*

*Fig. 6*

EP 0 358 552 A1

Fig. 8

Fig. 9

EP 0 358 552 A1

*Fig.10*

*Fig.11*

Fig. 12

Fig. 13

Fig. 14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2482418 (NORTENE) <br> * page 1, ligne 3 – page 1, ligne 22; figures 1-3 * | 1 | A01K61/00 |
| A | FR-A-2590765 (INTERMAS S.A.) <br> * page 3, ligne 17 – page 3, ligne 23; figures 1, 2 * | 1 | |
| A | FR-A-2607359 (NORTENE) | | |
| A | FR-A-2577106 (GILBERT) | | |
| A | GB-A-2170083 (MOXHAM) | | |

|  |
|---|
| **DOMAINES TECHNIQUES RECHERCHES (Int. Cl.5)** |
| A01K <br> B65D |

Le présent rapport a été établi pour toutes les revendications

| Lieu de la recherche | Date d'achèvement de la recherche | Examinateur |
|---|---|---|
| LA HAYE | 13 NOVEMBRE 1989 | VON ARX V.U. |